# EUROPEAN PATENT SPECIFICATION

(11) **EP 3 670 260 B1**
(45) Date of publication and mention of the grant of the patent: **18.05.2022**
(21) Application number: 18214035.0
(22) Date of filing: 19.12.2018
(51) Int. Cl.: B60Q 1/08, B60Q 1/076, B60Q 1/115, B62J 6/02

(54) **ILLUMINATION DEVICE FOR VEHICLE HEADLAMPS**
BELEUCHTUNGSVORRICHTUNG FÜR FAHRZEUGSCHEINWERFER
DISPOSITIF D'ÉCLAIRAGE POUR PHARES DE VÉHICULES

(43) Date of publication of application: 24.06.2020
(73) Proprietor: ZKW Group GmbH, 3250 Wieselburg (AT)
(72) Inventor: Kucka, Tomás, 95144 Výcapy-Opatovce (SK); Kokoska, Anton, 02705 Zázrivá (SK)
(74) Representative: Patentanwaltskanzlei Matschnig & Forsthuber OG

(56) References cited:
- EP-A2- 1 234 716
- EP-A2- 1 288 069
- EP-A2- 1 942 049
- DE-T5-112015 000 584
- US-A- 5 426 571
- US-A1- 2007 086 203
- US-A1- 2015 176 794

## Description

The invention relates to an illumination device for vehicle headlamps, especially for single-track vehicle headlamps.

Further, the invention relates to a stabilized illumination device for irradiating a stabilized light distribution, comprising at least one illumination device according to the invention, an external control unit and at least on roll angle sensor configured to determine a first roll angle from a defined horizontal standard position of the illumination device around the first axis, said external control unit is configured to frequently, preferably constantly, receive a roll angle from the at least one roll angle sensor and to control the first adjusting mechanism in order to keep the optical unit in the horizontal standard position.

Moreover, the invention relates to a vehicle headlamp for single-track vehicles, comprising at least one illumination device and/or at least one stabilized illumination device.

A problem encountered in the case of single-track motor vehicles, such as motorcycles, as they are driven around curves due to the inclination of the vehicle. As a rule, a headlight that is rigidly connected with the motorcycle or with the fork of the motorcycle can no longer illuminate the roadway in front of the motorcycle in an optimum fashion.

It should be noted, that the invention is basically suitable for every vehicle that experience inclination during cornering.

The setup of the light distribution, in particular a low beam distribution, is prescribed by law and measured on the vehicle standing straight. In each turn, the vehicle tilts with the headlamp or the illumination device about the longitudinal axis of the vehicle.

As a result, on one hand the visibility in the curve is reduced, on the other hand the oncoming traffic is blinded. This leads to a significant impairment of traffic safety.

There are various approaches in the state of the art to remedy this problem; by way of example, it might be mentioned that one can make provision for positioning the entire headlight in the motorcycle in an accordingly movable manner so that it can be swung simply upon the inclination of the motorcycle.

This is disadvantageous since the positioning of the entire headlight of the motorcycle is expensive, and also, since the entire headlight must be swung when driving around a curve. As a result, one must move a relatively great mass, the movement becomes slow, and furthermore, much structural space is required.

EP 1 942 049 A discloses an illumination device for vehicle headlamps, especially for single-track vehicle headlamps, comprising: an optical unit with at least one light source, said optical unit being configured to form a light distribution with a cut-off line, wherein the light distribution is radiated in a main beam direction; a shell in which the optical unit is mounted, said shell having a toothed array; an adapter with pulleys, wherein the shell engages with the adapter so as that the shell is rotatable on the adapter, wherein the adapter is mounted on a mount; and a first adjusting mechanism for rotating the optical unit around a first axis, wherein the first axis is oriented parallel to the main beam direction, said first adjusting mechanism comprising a motor with a gear wheel element, wherein said motor is attached to the adapter and configured to generate an angular motion of the gear wheel element along a second axis, wherein the gear wheel element is configured to engage with the toothed array of the shell in order to transmit the angular motion of the gear wheel element to an angular movement of the shell and the optical unit around the first axis; wherein the illumination device comprises a second adjusting mechanism for tilting the optical unit around a third axis, said second adjusting mechanism comprising a further motor being attached to the mount and configured to engage with the mount in order to move the shell and the optical unit around the third axis.

It is an object of the invention to provide an enhanced illumination device.

To achieve this object, the illumination device of the initially mentioned kind is further developed in that the abovementioned illumination device comprises:
- an optical unit with at least one light source, said optical unit being configured to form a light distribution with a cut-off line, wherein the light distribution is radiated in a main beam direction,
- a shell in which the optical unit is mounted, said shell having a first part-spherical gliding surface and a toothed array,
- an adapter with a second part-spherical gliding surface complementary to the first part-spherical gliding surface, wherein the shell engages with the adapter so as the first and second part-spherical gliding surfaces can glide on one another, wherein the adapter is mounted on a mount, and
- a first adjusting mechanism for rotating the optical unit around a first axis, wherein the first axis is oriented parallel to the main beam direction, said first adjusting mechanism comprising a motor with a gear wheel element, said motor is attached to the mount and configured to generate an angular motion of the gear wheel element along a second axis,
wherein the gear wheel element is configured to engage with the toothed array of the shell in order to transmit the angular motion of the gear wheel element to an angular movement of the shell and the optical unit around the first axis, wherein the illumination device comprises a second adjusting mechanism for tilting the optical unit around a third axis, said second adjusting mechanism comprising a linear drive with a transmission element, said linear drive is attached to the mount and configured to generate an angular motion of the transmission element around a fourth axis, wherein the transmission element is configured to engage with the shell or the optical unit in order to convert the angular motion of the transmission element around the fourth axis into an angular motion of the shell and the optical unit around the third axis, and wherein the gear wheel element stays in position along the second axis, and wherein the second axis and the fourth axis are parallel to the first axis.

If, when driving along a curve, the motor vehicle inclines into the curve, then only the optical unit, which forms a light distribution, preferably a low beam distribution with a cut-off line, upon a roadway, is tilted or rotated around the first axis so that the light image on the roadway is accordingly adapted. It is now no longer necessary to rotate the entire headlamp, as is the case in the state of the art.

By rotating the entire optical unit, one can make sure that the entire light image or light distribution is rotate accordingly and not just parts thereof. That prevents undesirable disturbing effects on the light distribution that is adapted to the inclination of the vehicle. For example, motorcycle headlamps have a beam pattern that is shaped in accordance with legal requirements to illuminate the road ahead without blinding the opposite traffic. The pattern suits all the requirements when it is aligned with the horizon. However, when the motorcycle rolls as in taking a curve, the range of the light beam on the inner side of the curve is significantly reduced, thus causing a safety risk in that the driver cannot see objects ahead in his path, whilst the light beam on the outer side of the curve blinds the opposite traffic.

Advantageously, the optical unit can be rotated within an angle between 0° and 70° around the first axis.

Advantageously, the transmission element is attached to the mount.

Advantageously, the linear drive comprises an actuating element, on which the transmission element is attached, said actuating element is linear moveable by the linear drive.

Advantageously, the adapter comprises a base body and first and second elastic tongues, said base body is formed as a spherical segment, wherein the first and second elastic tongues are disposed along the peripheral direction and on opposite sides of the base body, wherein the first and second elastic tongues are configured to receive the shell.

Advantageously, the first part-spherical gliding surface of the shell is formed as a spherical zone.

In geometry, a spherical segment is the solid defined by cutting a sphere with a pair of parallel planes. It can be thought of as a spherical cap with the top truncated, and so it corresponds to a spherical frustum. The surface of the spherical segment (excluding the bases) is called spherical zone.

Advantageously, the toothed array is partially disposed along the peripheral direction on the shell.

Advantageously, the optical unit comprises at least one light-forming component configured to form the light distribution of the optical unit by forming light emitted by the at least one light source.

Advantageously, the at least one light-forming component is designed as a reflector or a light-guiding element.

Advantageously, the optical unit comprises at least one heat sink configured to dissipate the heat of the at least one light source.

Advantageously, the optical unit comprises at least one projection lens and/or a shade. Advantageously, the third axis is orthogonal to the first axis.

Advantageously, the motor is formed as a linear drive or a rotary drive. Advantageously, the adapter is mounted on the mount by means of a holder.

The object can also be achieved by a stabilized illumination device for irradiating a stabilized light distribution, comprising at least one illumination device, an external control unit and at least on roll angle sensor configured to determine a first roll angle from a defined horizontal standard position of the illumination device around the first axis, said external control unit is configured to frequently, preferably constantly, receive a roll angle from the at least one roll angle sensor and to control the first adjusting mechanism in order to keep the optical unit in the horizontal standard position.

More specifically, the stabilized illumination device is configured for automatically maintaining the pattern of the light beam or light distribution levelled horizontally in the face of variations in the roll angle of the vehicle with respect to the horizon.

A horizontal standard position represents a normal position assumed by the rotatable optical unit during the straight forward drive of a motorcycle and is, when expressed in terms of the angle of rotation of the optical unit around the first axis, represented by a zero angle position. Hereby, the optical unit can rotate up to +/- 35° from the standard position.

The roll angle of the vehicle can be determined by various already known techniques; for example, it can be determined via ultrasound or gyroscopically or by pressure comparison in motorcycle fork legs.

Advantageously, the at least one roll angle sensor is configured to determine a second roll angle from a defined vertical standard position of the illumination device around the third axis, said external control unit is configured to frequently, preferably constantly, receive a second roll angle from the at least one roll angle sensor and to control the second adjusting mechanism in order to keep the optical unit in the vertical standard position.

A vertical standard position represents a normal position assumed by the rotatable optical unit during the straight forward drive of a motorcycle and is, when expressed in terms of the angle of tilting of the optical unit around the third axis, represented by a zero angle position. Hereby, the optical unit can tilt up to +/-10° from the standard position, advantageously up to +/- 5° from the standard position.

The object can also be achieved by a vehicle headlamp for single-track vehicles, comprising at least one illumination device and/or at least one stabilized illumination device.

In the following, in order to further demonstrate the present invention, illustrative and non-restrictive embodiments are discussed, as shown in the drawings, which show:
Fig. 1 a perspective view of an illumination device comprising an optical unit inserted into a shell, which is mounted in a mount;
Fig. 2 a perspective view of the illumination device of Fig. 1 without the mount, where a first and second adjusting mechanism can be seen;
Fig. 3A a back view of the illumination device of Fig. 2;
Fig. 3B a partial top view of the illumination device of Fig. 2;
Fig. 4 a section through the optical unit of Fig. 2;
Fig. 5 another back view of the illumination device of Fig. 2 without the first adjusting mechanism;
Fig. 6 a schematic side view of the optical unit in the shell with an illustrated inclination around the third axis around a second roll angle;
Fig. 7A a schematic representation of a light distribution with a vehicle headlamp of a single-track vehicle driving straight forward;
Fig. 7B a schematic representation of a light distribution with a vehicle headlamp according to prior art of a single-track vehicle driving along a curve;
Fig. 7C a schematic representation of a light distribution with a vehicle headlamp according to the invention of a single-track vehicle driving, inclined along a curve;
Fig. 8 a schematic representation of a stabilized illumination device; and
Fig. 9 a side view of a motorcycle with a stabilized illumination device, wherein the second roll angle is shown.

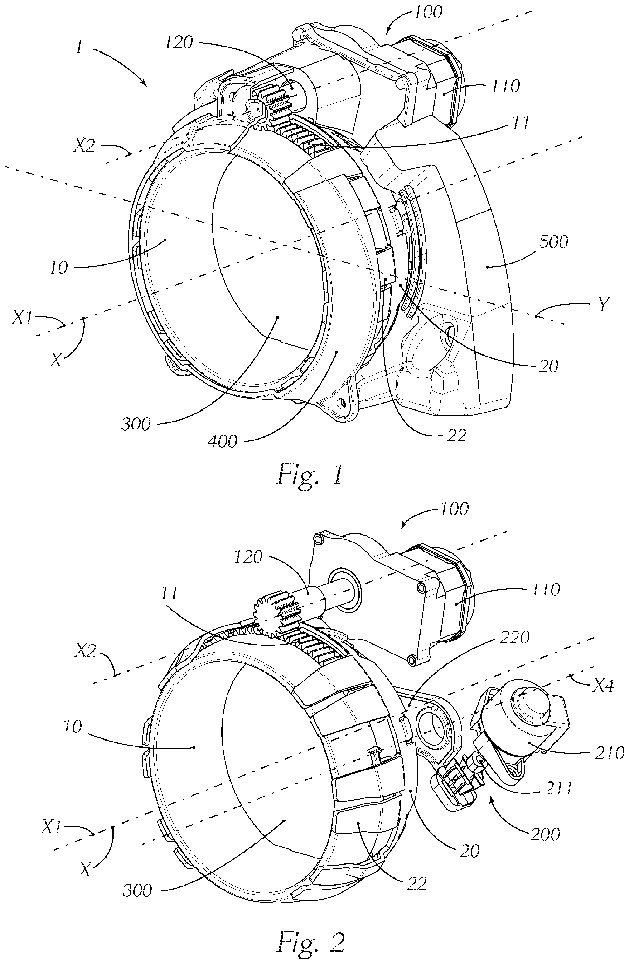

**Fig. 1** shows an illumination device 1 for vehicle headlamps, especially for single-track vehicle headlamps, in a perspective view. The illumination device 1 of **Fig. 1** comprises an optical unit **300** (not completely shown in detail in the figures) with at least one light source, said optical unit **300** being configured to form a light distribution with a cut-off line, wherein the light distribution is radiated in a main beam direction **X1**. The optical unit 300 comprises at least one light-forming component, e.g. a reflector and/or light guiding elements, configured to form the light distribution of the optical unit **300** by forming light emitted by the at least one light source. Further, the optical unit **300** comprises a heat sink **310** configured to dissipate the heat of the at least one light source.

The illumination device **1** further comprises a shell **10** in which the optical unit **300** is mounted, said shell **10** having a first part-spherical gliding surface, which is formed as a spherical segment, and a toothed array **11,** which is partially disposed along the peripheral direction on the shell **10.** Furthermore, the illumination device **1** comprises an adapter **20** with a second part-spherical gliding surface, wherein the shell **10** engages with the adapter **20** so as the first and second part-spherical gliding surfaces can glide on one another, wherein the adapter **20** is mounted on a mount **500** by means of a holder **400.**

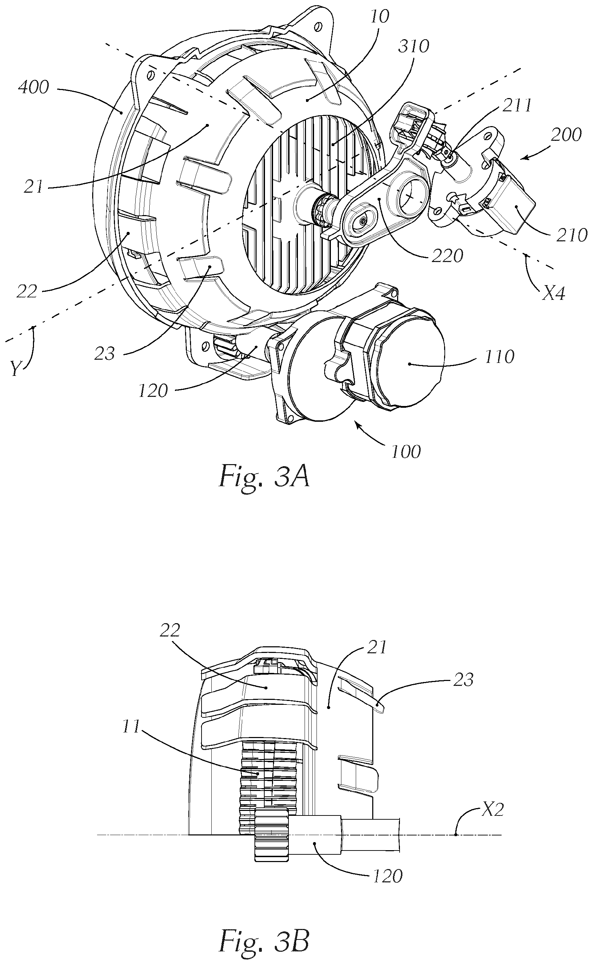

**Fig. 2** shows the illumination device **1** of **Fig. 1** without the mount, and as can be seen in **Fig. 2****,** the adapter **20** comprises a base body **21** and first elastic tongues **22** and second elastic tongues **23** (not shown in **Fig. 2****,** but in **Fig. 3A** and **Fig. 3B**), said base body **21** is formed as a spherical segment, wherein the first and second elastic tongues **22**, **23** are disposed along the peripheral direction and on opposite sides of the base body **21**, wherein the first and second elastic tongues **22**, **23** are configured to receive the shell **10.**

Also, the illumination device **1** having a first adjusting mechanism **100** for rotating the optical unit **300** around a first axis **X**, as can be seen in **Fig. 2**, wherein he first axis **X** is oriented parallel to the main beam direction **X1**, said first adjusting mechanism **100** comprising a motor 110, which can be formed as a linear drive or a rotary drive, with a gear wheel element **120**, said motor **110** is attached to the mount **500** and configured to generate an angular motion of the gear wheel element **120** along a second axis **X2**, wherein the gear wheel element **120** is configured to engage with the toothed array **11** of the shell **10** in order to transmit the angular motion of the gear wheel element **120** to an angular movement of the shell **10** and therefore the optical unit **300** around the first axis **X**.

As can be seen in **Fig. 1**, the second axis **X2** is parallel to the first axis **X**.

**Fig. 3A** shows a back view of the illumination device **1** in **Fig. 1** and **Fig. 2**, wherein the illumination device **1** further comprises a second adjusting mechanism **200** for tilting the optical unit **300** around a third axis **Y**, said third axis **Y** is orthogonal to the first axis **X**, as can also be seen in **Fig. 1**.

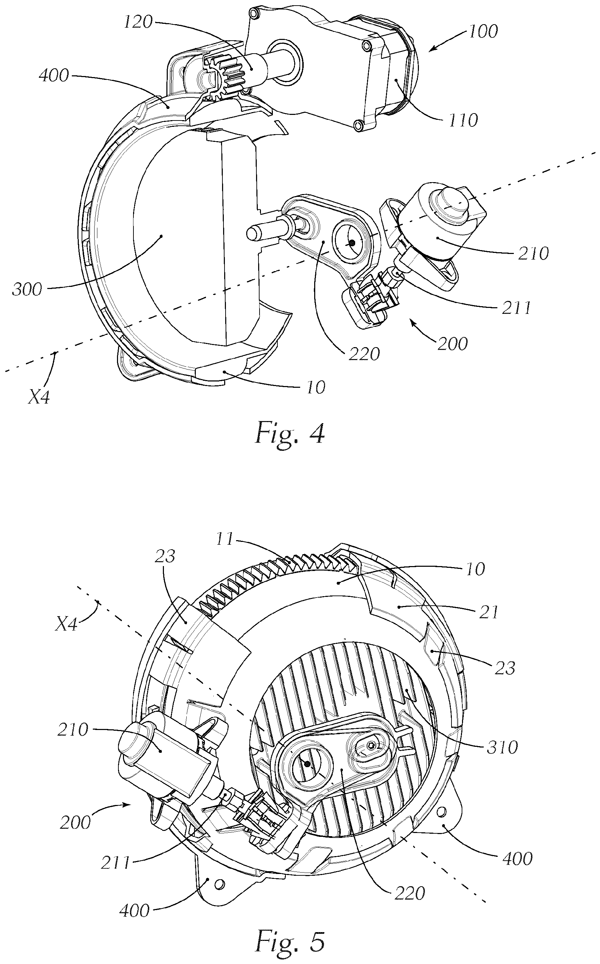

The second adjusting mechanism **200** comprising a linear drive **210** with a transmission element **220** and an actuating element **211**, on which the transmission element **220** is attached, said actuating element **211** is linear moveable by the linear drive **210.** The linear drive **210** is attached to the mount **500** and configured to generate an angular motion of the transmission element **220** around the fourth axis **X4**, wherein the transmission element **220** is configured to engage with the shell **10** or the optical unit **300** (in this case with the optical unit **300,** as can be seen more clearly in **Fig. 4**) in order to convert the angular motion of the transmission element **220** around the fourth axis **X4** into an angular motion of the shell **10** and the optical unit **300** around the third axis **Y.** The fourth axis **X4** is also parallel to the first axis **X.** In the example shown in the figures, both the first adjusting mechanism **100** and the second adjusting mechanism **200** comprise an internal control unit (not shown) to control the gear wheel element **120** and the actuating element **211.**

**Fig. 4** shows a section through the illumination device **1** illustrated in **Fig. 2****.** In this view, one can see that transmission element **220** of the second adjusting mechanism **200** engages with the optical element **300,** more specifically with the heat sink **310** of the optical unit **300.**

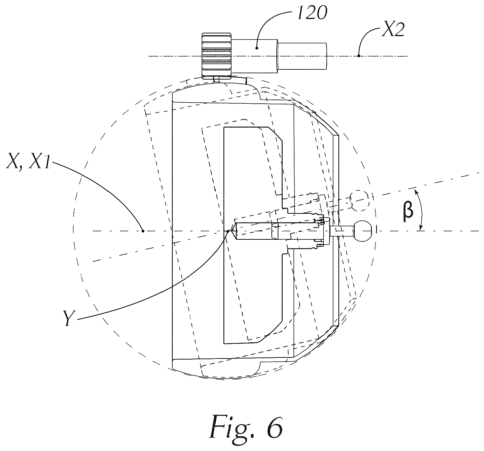

**Fig. 5** shows an illustrated movement of the transmission element **220** of the second adjusting mechanism **200** around the fourth axis **X4,** wherein the same movement is illustrated in a schematic side view of the illumination device **1** in **Fig. 6****,** wherein the rotational movement of the transmission element **220** around the fourth axis **X4** converts to a tilting movement of the optical unit **300** around the third axis **Y** in an angle **β**, wherein the gear wheel element **120** stays in position along the second axis, as can be seen in **Fig. 6****.**

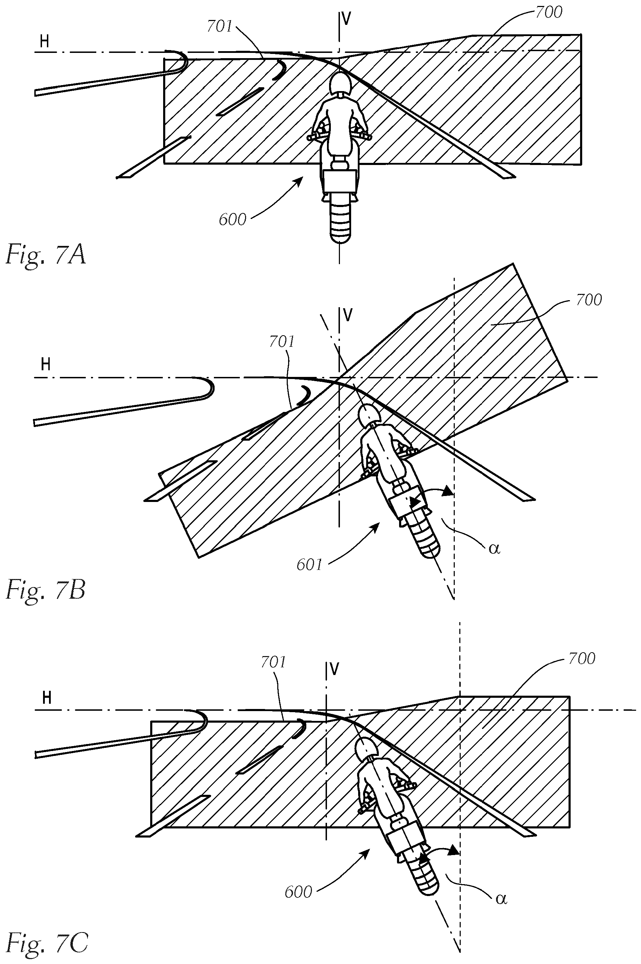

**Fig. 7A** shows a motorcycle **600** with a stabilized illumination device **2** for stabilizing a light distribution **700,** wherein the motorcycle **600** drives straight forward with no tilt or any roll angle, which determine a standard position for the motorcycle **600** and/or the light distribution **700,** and the cut-off line **701** of the light distribution **700** is parallel to the horizon **H.** The entire illumination device **2** can be arranged in a fixed manner in a housing (not shown) closed by means of a covering disc or a headlight lens, and built into a motor vehicle in a corresponding opening.

**Fig. 7B** shows an inclined motorcycle **601** with a vehicle headlamp of prior art, wherein the light distribution **700** formed by the vehicle headlamp is not rotated around the first axis **X**, therefore the cut-off line **701** of the light distribution **700** is not parallel to the horizon during driving along a curve and could blind oncoming traffic.

**Fig. 7C** shows the motorcycle of **Fig. 7A****,** said motorcycle **600** drives along a curve and is inclined at a roll angle **α**, as can be seen in **Fig. 7C****.** The light distribution **700** in **Fig. 7C** is aligned or rotated around the first axis **X** about the same amount of the roll angle **α** due to the stabilized illumination device **2,** but in the opposite direction or inclination of the tilted motorcycle **600.**

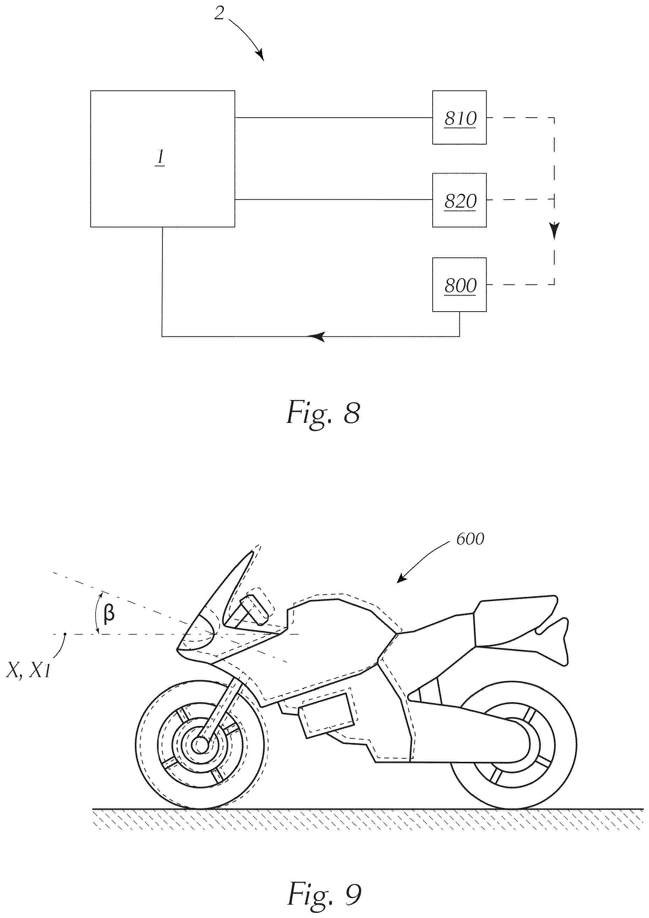

**Fig. 8** shows a schematic representation of the stabilized illumination device **2** of **Fig. 7A** and **7C****,** said stabilized illumination device **2** comprises at least one illumination device **1** according to the invention, an external control unit **800** and a first roll angle sensor **810** configured to determine a first roll angle **α** from a defined horizontal standard position of the illumination device **1** around the first axis **X**, for instance the determined standard position in regard to **Fig. 7A****,** said external control unit **800** is configured to frequently, preferably constantly, receive a roll angle **α** from first roll angle sensor **810** and to control the first adjusting mechanism **100** in order to keep the optical unit **300** in the standard position. In other words, the external control unit **800** uses the signal from the first roll angle sensor **810** to control the first adjusting mechanism **100** to adjusting the rotational orientation of the optical unit **300** around the first axis **X.**

Further, the stabilized illumination device comprises a second roll angle sensor **820** configured to determine a second roll angle **β** from a defined vertical standard position of the illumination device **1** around the third axis **Y,** said external control unit **800** is configured to frequently, preferably constantly, receive a second roll angle **β** from the second roll angle sensor **820** and to control the second adjusting mechanism **200** in order to keep the optical unit **300** in the vertical standard position.

**Fig. 9** shows a motorcycle **600** with a stabilized illumination device in a side view, wherein the motorcycle e.g. is in an accelerated motion, which is symbolized by the dashed lines.

More specifically, the stabilized illumination device **2** is configured for automatically maintaining the pattern of the light beam or light distribution levelled horizontally and vertically in the face of variations in the first roll angle **α** and the second roll angle **β** of the vehicle with respect to the horizon.

A horizontal standard position represents generally a normal position assumed by the rotatable optical unit **300** during the straight forward drive of a motorcycle **600** and is, when expressed in terms of the angle of rotation of the optical unit **300** around the first axis **X**, represented by a zero angle position.

A vertical standard position represents generally a normal position assumed by the rotatable optical unit **300** during a rest position of a motorcycle **600** and is, when expressed in terms of the angle of tilting of the optical unit **300** around the third axis **Y,** represented by a zero angle position.

The first roll angle **α** and the second roll angle **β** of the motorcycle **600** can be determined by various already known techniques; for example, it can be determined via ultrasound or gyroscopically or by pressure comparison in motorcycle fork legs.

### LIST OF REFERENCE SIGNS

| | |
|---|---|
| Illumination device... | 1 |
| Stabilized illumination device... | 2 |
| Shell... | 10 |
| Toothed array... | 11 |
| Adapter... | 20 |
| Base body... | 21 |
| First elastic tongues.... | 22 |
| Second elastic tongues... | 23 |
| First adjusting mechanism... | 100 |
| Motor... | 110 |
| Gear wheel element... | 120 |
| Second adjusting mechanism... | 200 |
| Linear drive... | 210 |
| Actuating element... | 211 |
| Transmission element... | 220 |
| Optical unit... | 300 |
| Heat sink... | 310 |
| Holder... | 400 |
| Mount... | 500 |
| Motorcycle... | 600 |
| Motorcycle (prior art)... | 601 |
| Light distribution... | 700 |
| Cut-offline... | 701 |
| External control unit... | 800 |
| First roll angle sensor... | 810 |
| Second roll angle sensor... | 820 |
| First roll angle... | α (Alpha) |
| Second roll angle... | β (Beta) |
| Main beam direction... | X1 |
| First axis... | X |
| Second Axis... | X2 |
| Third Axis... | Y |
| Fourth axis... | X4 |
| Horizon... | H |

## Claims

1. Illumination device (1) for vehicle headlamps, especially for single-track vehicle headlamps, comprising:
- an optical unit (300) with at least one light source, said optical unit (300) being configured to form a light distribution with a cut-off line, wherein the light distribution is radiated in a main beam direction (X1),
- a shell (10) in which the optical unit (300) is mounted, said shell (10) having a first part-spherical gliding surface and a toothed array (11),
- an adapter (20) with a second part-spherical gliding surface complementary to the first part-spherical gliding surface, wherein the shell (10) engages with the adapter (20) so as the first and second part-spherical gliding surfaces can glide on one another, wherein the adapter (20) is mounted on a mount (500), and
- a first adjusting mechanism (100) for rotating the optical unit (300) around a first axis (X), wherein the first axis (X) is oriented parallel to the main beam direction (X1), said first adjusting mechanism (100) comprising a motor (110) with a gear wheel element (120), said motor (110) is attached to the mount (500) and configured to generate an angular motion of the gear wheel element (120) along a second axis (X2), wherein the gear wheel element (120) is configured to engage with the toothed array (11) of the shell (10) in order to transmit the angular motion of the gear wheel element (120) to an angular movement of the shell (10) and the optical unit (300) around the first axis (X), wherein
the illumination device (1) comprises a second adjusting mechanism (200) for tilting the optical unit (300) around a third axis (Y), said second adjusting mechanism (200) comprising a linear drive (210) with a transmission element (220), said linear drive (210) is attached to the mount (500) and configured to generate an angular motion of the transmission element (220) around a fourth axis (X4), wherein the transmission element (220) is configured to engage with the shell (10) or the optical unit (300) in order to convert the angular motion of the transmission element (220) around the fourth axis (X4) into an angular motion of the shell (10) and the optical unit (300) around the third axis (Y), and wherein the gear wheel element (120) stays in position along the second axis (X2), and wherein
the second axis (X2) and the fourth axis (X4) are parallel to the first axis (X).

2. Illumination device (1) according to claim 1, **wherein** the linear drive (210) comprises an actuating element (211), on which the transmission element (220) is attached, said actuating element (211) is linear moveable by the linear drive (210).

3. Illumination device (1) according to claims 1 or 2, **wherein** the adapter (20) comprises a base body (21) and first and second elastic tongues (22, 23), said base body (21) is formed as a spherical segment, wherein the first and second elastic tongues (22, 23) are disposed along the peripheral direction and on opposite sides of the base body (21), wherein the first and second elastic tongues (22, 23) are configured to receive the shell (10).

4. Illumination device (1) according to claims 1 to 3, **wherein** the first part-spherical gliding surface of the shell (10) is formed as a spherical zone.

5. Illumination device (1) according to claims 1 to 4, **wherein** the toothed array (11) is partially disposed along the peripheral direction on the shell (10).

6. Illumination device (1) according to claims 1 to 5, **wherein** the optical unit (300) comprises at least one light-forming component configured to form the light distribution of the optical unit (300) by forming light emitted by the at least one light source.

7. Illumination device (1) according to claims 1 to 6, **wherein** the optical unit (300) comprises at least one heat sink (310) configured to dissipate the heat of the at least one light source.

8. Illumination device (1) according to claims 1 to 7, **wherein** the third axis (Y) is orthogonal to the first axis (X).

9. Illumination device (1) according to claims 1 to 8, **wherein** the motor (110) is formed as a linear drive or a rotary drive.

10. Illumination device (1) according to claims 1 to 9, **wherein** the adapter (20) is mounted on the mount (500) by means of a holder (400).

11. Stabilized illumination device (2) for irradiating a stabilized light distribution, comprising at least one illumination device (1) according to any of the preceding claims, an external control unit (800) and at least on roll angle sensor (810) configured to determine a first roll angle (α) from a defined horizontal standard position of the illumination device (1) around the first axis (X), said external control unit (800) is configured to frequently, preferably constantly, receive a first roll angle (α) from the at least one roll angle sensor (810) and to control the first adjusting mechanism (100) in order to keep the optical unit (300) in the horizontal standard position.

12. Stabilized illumination device (2) according to claim 11, **wherein** the at least one roll angle sensor (810) is configured to determine a second roll angle (β) from a defined vertical standard position of the illumination device (1) around the third axis (Y), said external control unit is configured to frequently, preferably constantly, receive a second roll angle (β) from the at least one roll angle sensor (810) and to control the second adjusting mechanism (200) in order to keep the optical unit (300) in the vertical standard position.

13. Vehicle headlamp for single-track vehicles, comprising at least one illumination device (1) according to claim 1 to 10 and/or at least one stabilized illumination device (2) according to claim 11 or 12.

## Patentansprüche

1. Beleuchtungsvorrichtung (1) für Fahrzeugscheinwerfer, insbesondere für einspurige Fahrzeugscheinwerfer, umfassend:
- eine optische Einheit (300) mit mindestens einer Lichtquelle, wobei die optische Einheit (300) so ausgebildet ist, dass sie eine Lichtverteilung mit einer Hell-Dunkel-Grenze bildet, wobei die Lichtverteilung in eine Hauptstrahlrichtung (X1) abgestrahlt wird,
- ein Gehäuse (10), in dem die optische Einheit (300) montiert ist, wobei das Gehäuse (10) eine erste teilkugelförmige Gleitfläche und eine Zahnreihe (11) aufweist,
- einen Adapter (20) mit einer zweiten teilkugelförmigen Gleitfläche, die komplementär zu der ersten teilkugelförmigen Gleitfläche ist, wobei das Gehäuse (10) mit dem Adapter (20) in Eingriff steht, so dass die erste und die zweite teilkugelförmige Gleitfläche aufeinander gleiten können, wobei der Adapter (20) an einer Halterung (500) angebracht ist, und
- einen ersten Einstellmechanismus (100) zum Drehen der optischen Einheit (300) um eine erste Achse (X), wobei die erste Achse (X) parallel zur Hauptstrahlrichtung (X1) ausgerichtet ist, wobei der erste Einstellmechanismus (100) einen Motor (110) mit einem Zahnradelement (120) umfasst, wobei der Motor (110) an der Halterung (500) angebracht ist und so konfiguriert ist, dass er eine Winkelbewegung des Zahnradelements (120) entlang einer zweiten Achse (X2) erzeugt, wobei das Zahnradelement (120) so konfiguriert ist, dass es mit der Zahnanordnung (11) des Gehäuses (10) in Eingriff kommt, um die Winkelbewegung des Zahnradelements (120) in eine Winkelbewegung des Gehäuses (10) und der optischen Einheit (300) um die erste Achse (X) zu übertragen, wobei
die Beleuchtungsvorrichtung (1) einen zweiten Verstellmechanismus (200) zum Kippen der optischen Einheit (300) um eine dritte Achse (Y) aufweist, wobei der zweite Verstellmechanismus (200) einen Linearantrieb (210) mit einem Übertragungselement (220) aufweist, der Linearantrieb (210) an der Halterung (500) befestigt ist und zur Erzeugung einer Winkelbewegung des Übertragungselements (220) um eine vierte Achse (X4) ausgebildet ist, wobei das Übertragungselement (220) so konfiguriert ist, dass es mit dem Gehäuse (10) oder der optischen Einheit (300) in Eingriff kommt, um die Winkelbewegung des Übertragungselements (220) um die vierte Achse (X4) in eine Winkelbewegung des Gehäuses (10) und der optischen Einheit (300) um die dritte Achse (Y) umzuwandeln, und wobei das Zahnradelement (120) entlang der zweiten Achse (X2) in Position bleibt, und wobei
die zweite Achse (X2) und die vierte Achse (X4) parallel zu der ersten Achse (X) sind.

2. Beleuchtungsvorrichtung (1) nach Anspruch 1, wobei der Linearantrieb (210) ein Betätigungselement (211) aufweist, an dem das Übertragungselement (220) befestigt ist, wobei das Betätigungselement (211) durch den Linearantrieb (210) linear bewegbar ist.

3. Beleuchtungsvorrichtung (1) nach Anspruch 1 oder 2, wobei der Adapter (20) einen Grundkörper (21) und erste und zweite elastische Zungen (22, 23) aufweist, der Grundkörper (21) als Kugelsegment ausgebildet ist, wobei die ersten und zweiten elastischen Zungen (22, 23) entlang der Umfangsrichtung und auf gegenüberliegenden Seiten des Grundkörpers (21) angeordnet sind, wobei die ersten und zweiten elastischen Zungen (22, 23) zur Aufnahme der Schale (10) ausgebildet sind.

4. Beleuchtungsvorrichtung (1) nach einem der Ansprüche 1 bis 3, wobei die erste teilkugelförmige Gleitfläche der Schale (10) als kugelförmige Zone ausgebildet ist.

5. Beleuchtungsvorrichtung (1) nach einem der Ansprüche 1 bis 4, wobei die Zahnleiste (11) teilweise entlang der Umfangsrichtung auf der Schale (10) angeordnet ist.

6. Beleuchtungsvorrichtung (1) nach einem der Ansprüche 1 bis 5, wobei die optische Einheit (300) mindestens ein lichtformendes Bauteil aufweist, das so ausgebildet ist, dass es die Lichtverteilung der optischen Einheit (300) durch Formung des von der mindestens einen Lichtquelle emittierten Lichts bildet.

7. Beleuchtungsvorrichtung (1) nach einem der Ansprüche 1 bis 6, wobei die optische Einheit (300) mindestens einen Kühlkörper (310) umfasst, der so konfiguriert ist, dass er die Wärme der mindestens einen Lichtquelle ableitet.

8. Beleuchtungsvorrichtung (1) nach einem der Ansprüche 1 bis 7, wobei die dritte Achse (Y) orthogonal zur ersten Achse (X) verläuft.

9. Beleuchtungsvorrichtung (1) nach einem der Ansprüche 1 bis 8, wobei der Motor (110) als Linearantrieb oder als Drehantrieb ausgebildet ist.

10. Beleuchtungsvorrichtung (1) nach einem der Ansprüche 1 bis 9, wobei der Adapter (20) mittels eines Halters (400) an der Halterung (500) befestigt ist.

11. Stabilisierte Beleuchtungsvorrichtung (2) zum Abstrahlen einer stabilisierten Lichtverteilung, umfassend mindestens eine Beleuchtungsvorrichtung (1) nach einem der vorhergehenden Ansprüche, eine externe Steuereinheit (800) und mindestens einen Rollwinkelsensor (810), der ausgebildet ist, um aus einer definierten horizontalen Standardposition der Beleuchtungsvorrichtung (1) um die erste Achse (X) einen ersten Rollwinkel (α) zu bestimmen, die externe Steuereinheit (800) so konfiguriert ist, dass sie häufig, vorzugsweise ständig, einen ersten Rollwinkel (α) von dem mindestens einen Rollwinkelsensor (810) empfängt und den ersten Verstellmechanismus (100) steuert, um die optische Einheit (300) in der horizontalen Standardposition zu halten.

12. Stabilisierte Beleuchtungsvorrichtung (2) nach Anspruch 11, wobei der mindestens eine Rollwinkelsensor (810) so konfiguriert ist, dass er einen zweiten Rollwinkel (β) aus einer definierten vertikalen Standardposition der Beleuchtungsvorrichtung (1) um die dritte Achse (Y) bestimmt, wobei die externe Steuereinheit so konfiguriert ist, dass sie häufig, vorzugsweise ständig, einen zweiten Rollwinkel (β) von dem mindestens einen Rollwinkelsensor (810) empfängt und den zweiten Einstellmechanismus (200) steuert, um die optische Einheit (300) in der vertikalen Standardposition zu halten.

13. Fahrzeugscheinwerfer für einspurige Fahrzeuge, umfassend mindestens eine Beleuchtungseinrichtung (1) nach einem der Ansprüche 1 bis 10 und/oder mindestens eine stabilisierte Beleuchtungseinrichtung (2) nach einem der Ansprüche 11 oder 12.

## Revendications

1. Dispositif d'éclairage (1) pour phares de véhicules, en particulier pour phares de véhicules à voie unique, comprenant :
- une unité optique (300) avec au moins une source de lumière, ladite unité optique (300) étant configurée pour former une distribution de lumière avec une ligne de coupure, dans laquelle la distribution de lumière est rayonnée dans une direction de faisceau principal (X1),
- une coque (10) dans laquelle l'unité optique (300) est montée, ladite coque (10) ayant une première surface de glissement partiellement sphérique et un réseau denté (11),
- un adaptateur (20) avec une seconde surface de glissement partiellement sphérique complémentaire de la première surface de glissement partiellement sphérique, dans lequel la coque (10) s'engage avec l'adaptateur (20) de sorte que les première et seconde surfaces de glissement partiellement sphériques puissent glisser l'une sur l'autre, dans lequel l'adaptateur (20) est monté sur une monture (500), et
- un premier mécanisme de réglage (100) pour faire tourner l'unité optique (300) autour d'un premier axe (X), dans lequel le premier axe (X) est orienté parallèlement à la direction du faisceau principal (X1), ledit premier mécanisme de réglage (100) comprenant un moteur (110) avec un élément de roue d'engrenage (120), ledit moteur (110) est fixé à la monture (500) et configuré pour générer un mouvement angulaire de l'élément de roue d'engrenage (120) le long d'un deuxième axe (X2), dans lequel l'élément de roue dentée (120) est configuré pour s'engager avec le réseau denté (11) de la coque (10) afin de transmettre le mouvement angulaire de l'élément de roue dentée (120) à un mouvement angulaire de la coque (10) et de l'unité optique (300) autour du premier axe (X), dans lequel
le dispositif d'éclairage (1) comprend un deuxième mécanisme de réglage (200) pour incliner l'unité optique (300) autour d'un troisième axe (Y), ledit deuxième mécanisme de réglage (200) comprenant un entraînement linéaire (210) avec un élément de transmission (220), ledit entraînement linéaire (210) est fixé à la monture (500) et configuré pour générer un mouvement angulaire de l'élément de transmission (220) autour d'un quatrième axe (X4), dans lequel l'élément de transmission (220) est configuré pour s'engager avec la coque (10) ou l'unité optique (300) afin de convertir le mouvement angulaire de l'élément de transmission (220) autour du quatrième axe (X4) en un mouvement angulaire de la coque (10) et de l'unité optique (300) autour du troisième axe (Y), et dans lequel l'élément de roue dentée (120) reste en position le long du deuxième axe (X2), et dans lequel
le deuxième axe (X2) et le quatrième axe (X4) sont parallèles au premier axe (X).

2. Dispositif d'éclairage (1) selon la revendication 1, dans lequel l'entraînement linéaire (210) comprend un élément d'actionnement (211), sur lequel l'élément de transmission (220) est fixé, ledit élément d'actionnement (211) est déplaçable linéairement par l'entraînement linéaire (210).

3. Dispositif d'éclairage (1) selon les revendications 1 ou 2, dans lequel l'adaptateur (20) comprend un corps de base (21) et des première et seconde languettes élastiques (22, 23), ledit corps de base (21) est formé comme un segment sphérique, dans lequel les première et seconde languettes élastiques (22, 23) sont disposées le long de la direction périphérique et sur les côtés opposés du corps de base (21), dans lequel les première et seconde languettes élastiques (22, 23) sont configurées pour recevoir la coque (10).

4. Dispositif d'éclairage (1) selon les revendications 1 à 3, dans lequel la première surface de glissement partiellement sphérique de la coque (10) est formée comme une zone sphérique.

5. Dispositif d'éclairage (1) selon les revendications 1 à 4, dans lequel le réseau denté (11) est partiellement disposé selon la direction périphérique sur la coque (10).

6. Dispositif d'éclairage (1) selon les revendications 1 à 5, dans lequel l'unité optique (300) comprend au moins un composant de formation de lumière configuré pour former la distribution lumineuse de l'unité optique (300) en formant la lumière émise par l'au moins une source lumineuse.

7. Dispositif d'éclairage (1) selon les revendications 1 à 6, dans lequel l'unité optique (300) comprend au moins un dissipateur thermique (310) configuré pour dissiper la chaleur de la au moins une source lumineuse.

8. Dispositif d'éclairage (1) selon les revendications 1 à 7, dans lequel le troisième axe (Y) est orthogonal au premier axe (X).

9. Dispositif d'éclairage (1) selon les revendications 1 à 8, dans lequel le moteur (110) est réalisé comme un entraînement linéaire ou un entraînement rotatif.

10. Dispositif d'éclairage (1) selon les revendications 1 à 9, dans lequel l'adaptateur (20) est monté sur le support (500) au moyen d'un support (400).

11. Dispositif d'éclairage stabilisé (2) pour irradier une distribution lumineuse stabilisée, comprenant au moins un dispositif d'éclairage (1) selon l'une quelconque des revendications précédentes, une unité de commande externe (800) et au moins un capteur d'angle de roulis (810) configuré pour déterminer un premier angle de roulis (α) à partir d'une position standard horizontale définie du dispositif d'éclairage (1) autour du premier axe (X), ladite unité de commande externe (800) est configurée pour recevoir fréquemment, de préférence constamment, un premier angle de roulis (α) de l'au moins un capteur d'angle de roulis (810) et pour commander le premier mécanisme de réglage (100) afin de maintenir l'unité optique (300) dans la position standard horizontale.

12. Dispositif d'éclairage stabilisé (2) selon la revendication 11, dans lequel le au moins un capteur d'angle de roulis (810) est configuré pour déterminer un deuxième angle de roulis (β) à partir d'une position standard verticale définie du dispositif d'éclairage (1) autour du troisième axe (Y), ladite unité de commande externe est configurée pour recevoir fréquemment, de préférence constamment, un deuxième angle de roulis (β) à partir du au moins un capteur d'angle de roulis (810) et pour commander le deuxième mécanisme de réglage (200) afin de maintenir l'unité optique (300) dans la position standard verticale.

13. Projecteur de véhicule pour véhicules à voie unique, comprenant au moins un dispositif d'éclairage (1) selon les revendications 1 à 10 et/ou au moins un dispositif d'éclairage stabilisé (2) selon la revendication 11 ou 12.
